Europäisches Patentamt

European Patent Office

Office européen des brevets

(11) Publication number: **0 262 592**
**A2**

# (12) EUROPEAN PATENT APPLICATION

(21) Application number: **87113980.4**

(22) Date of filing: **23.09.87**

(51) Int. Cl.⁴: **B62B 3/10**

(30) Priority: **29.09.86 GB 8623363**

(43) Date of publication of application:
**06.04.88 Bulletin 88/14**

(84) Designated Contracting States:
**AT BE CH DE ES FR IT LI LU NL SE**

(71) Applicant: **Wood, Clifford Rispin**
**303, Hull Road Anlaby Common**
**Hull North Humberside HU4 7RY(GB)**

Applicant: **Wood, Jeffrey**
**303, Hull Road Anlaby Common**
**Hull North Humberside HU4 7RY(GB)**

(72) Inventor: **Wood, Clifford Rispin**
**303 Hull Road Anlaby Common**
**Anlaby Hull North Humberside HU4 7RY(GB)**

(74) Representative: **Oulton, Richard John**
**R.J. OULTON & CO. 22 Whitefriargate**
**Hull North Humberside HU1 2EX(GB)**

(54) **Shopping trolley.**

(57) This invention relates to a shopping trolley comprising a wheeled frame, a handle (45), a shopping bag arrangement (31) and rigid feet (33a, 34a, 33b & 34b) upon which the trolley can adopt an upright stable position. The shopping bag arrangement (31) comprises a rigid, substantially rectangular, box-like arrangement, which may be moulded in one piece or fabricated, with a lid closure comprising a seat (32) upon which a person may sit when the trolley is in its upright stable position.

The trolley may have two wheels but in the embodiment most suited for elderly or otherwise disabled persons the trolley has four wheels (35, 36, 38 & 39) and the trolley serves as a walking aid. With such an arrangement the wheels (35, 36, 38 & 39) can be displaced towards and away from their respective ground engaging positions via linkages (50, 51).

FIG.4.

## "SHOPPING TROLLEY"

This invention relates to a shopping trolley.

Shopping trolleys are well known in the art and generally comprise a two-wheeled frame upon which a shopping bag or basket is mounted and a handle by which the trolley may be pulled or pushed by the shopper. The shopping bag or basket is often of rectangular form and the frame includes a platform upon which the base of the bag or basket is supported. Frequently, such shopping trolleys include two rigid feet secured to the platform remote from the wheels and which, in combination with the two wheels, allow the trolley to adopt a free-standing, upright position.

The present invention seeks to provide a shopping trolley including features not found in prior art shopping trolleys and which are particularly advantageous to elderly or otherwise infirm persons.

According to the present invention there is provided a shopping trolley comprising a wheeled frame, a handle, a shopping bag arrangement and rigid feet upon which the trolley can adopt an upright stable position, characterised in that the shopping bag arrangement comprises a rigid, generally rectangular, box-like structure which forms part of the said frame or is secured to the said frame, and a lid for said rectangular box-like structure is adapted to define a seat upon which a person may sit when the trolley is upright and supported on its rigid feet.

In one embodiment in accordance with the invention the said rigid, generally rectangular, box-like structure is made in one piece and may conveniently comprise a one-piece plastics moulding.

In another embodiment the said rigid, generally rectangular, box-like structure is fabricated and may conveniently comprise a rigid metal mesh structure.

Preferably the said wheeled frame comprises rigid elements secured to the rigid, generally rectangular, box-like structure and said elements support at least one wheeled axle.

In one embodiment in accordance with the invention the trolley includes two wheels supported by the frame and arranged for rotation about a common axis and with such an embodiment the said two wheels may be arranged to remain in contact with the ground whilst said trolley is erect and supported on its rigid feet or the two wheels may be arranged to be supported out of contact with the ground whilst said trolley is erect and supported on its rigid feet.

When the said two wheels are to be out of contact with the ground when the trolley is erect and supported on its rigid feet the axis of the wheels may be so located relative to the box-like structure and the ground-engagement plane of the rigid feet that said wheels are only brought into a ground-engaging condition when the trolley is tilted from its upright position.

In another embodiment in accordance with the invention the trolley includes four wheels, two wheels being mounted for rotation about a first common axis and two wheels being mounted for rotation about a second common axis, said first and second common axes being substantially parallel.

Preferably, with the trolley upright, the four wheels are optionally displaceable between one condition wherein the rigid feet are in contact with the ground and a second condition wherein said rigid feet are out of contact with the ground.

Preferably the trolley includes a link mechanism for said wheels which allow the axes of said wheels to be displaced towards and away from the ground-engaging plane of said rigid feet.

In one embodiment in accordance with the invention the wheels are resiliently loaded towards that condition wherein the fixed feet are displaced from their ground-engaging condition and said resilient loading is so arranged that the fixed feet are only engaged with the ground when a person is sitting on the said lid seat.

In another embodiment in accordance with the invention said link mechanism allows said wheels to be displaced between a first condition wherein the fixed feet are clear of the ground and a second condition wherein the fixed feet are engaged with the ground and said wheels are elevated out of contact with the ground.

Preferably the handle is attached to said rigid, generally rectangular, box-like structure and is displaceable between a normal operating position, for pushing or pulling the trolley, and an inoperative position, the said handle being linked to said link mechanism and in displacing from its normal operating position serving to elevate the wheels to allow the trolley to stand erect on its fixed feet and when displacing towards its normal operating position serving to lower said wheels to displace the fixed feet away from the ground.

The invention will now be described further by way of example with reference to the accompanying drawings in which,

Fig. 1 shows, in perspective view, one embodiment of a two wheeled trolley in accordance with the invention,

Fig. 2 shows, diagrammatically, a side view of part of the trolley shown in Fig. 1 with the trolley feet in a ground-engaging position,

Fig. 3 shows diagrammatically, a side view similar to Fig 2 but with the trolley wheels in a ground-engaging position,

Fig. 4 shows a perspective view of a second embodiment in accordance with the invention,

Fig. 5 show, diagrammatically, a side view of parts of the trolley shown in Fig. 4, with the wheels in a ground-engaging position and,

Fig. 6 shows, diagrammatically, a side view similar to Fig. 5 with feet in ground-engaging position.

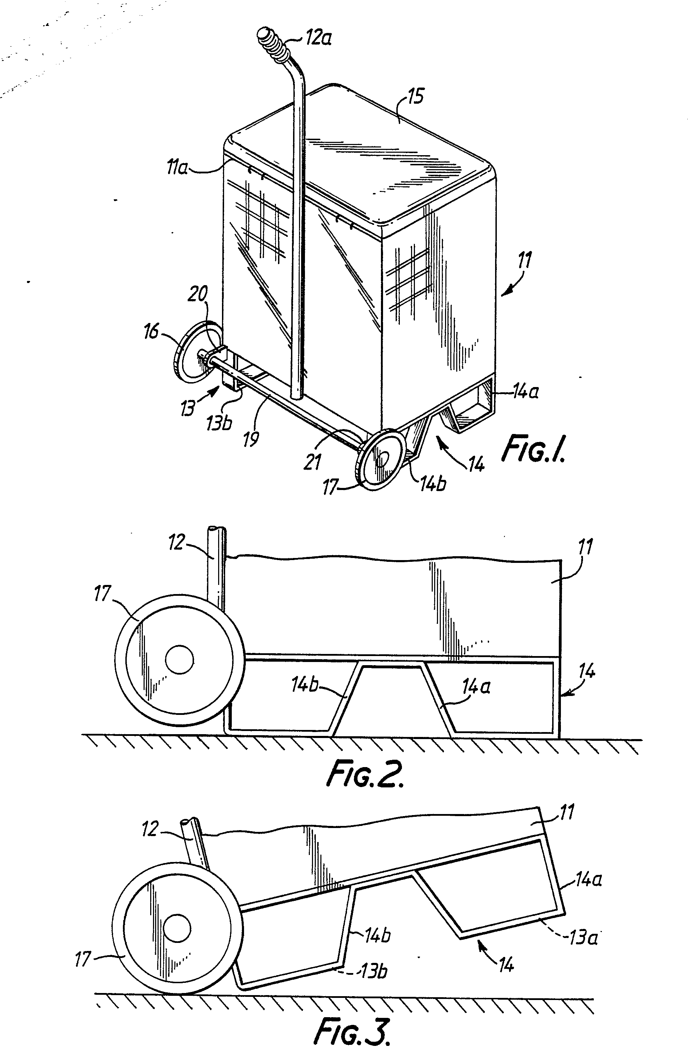

Referring to the embodiment illustrated in Figs 1,2 and 3 a shoppers trolley comprises a rigid box-like shopping bag support arrangement 11, constructed from vertical and horizontal rods welded together at their intersections, open at the top, a handle 12 secured to the arrangément 11, and feet 13 and 14 depending downwardly from the lower regions of the arrangement 11. The feet 13 and 14 are each constructed from a bent iron strip to define forward feet 13a and 14a respectively and rear feet 13b and 14b respectively.

Throughout this description the "forward" direction of the trolley shall mean that directions when the trolley is being pushed with the handle 12 rearmost and the terms "forward" "rear" "left" and "right" shall be interpreted as by a person so pushing the trolley.

When the trolley is supported wholly on forward feet 13a 14a and rear feet 13b and 14b the box-like support arrangement 11 is upright and the trolley is stable. An upholstered lid 15 for the arrangement 11, hingedly attached to the uppermost rear horizontal rod 11a of the arrangement 11, defines a seat when the trolley is upright and stable.

The trolley includes left and right wheels 16 and 17, mounted on a common axle 19 supported by two brackets 20 and 21 extending rearwardly from the lower regions of the bag support arrangement 11.

The axle 19 is spaced from the ground-engaging plane of the feet 13a 14a 13 b and 14b by a distance greater than the radius of wheels 16 and 17 and whereby, when the trolley is standing on feet 13a 14a 13b and 14b, the wheels 16 and 17 are out of contact with the ground and the trolley is supported wholly on feet 13a 14a 13b and 14b and is thereby stable. This position for the trolley is illustrated in Fig. 2 and in this position a person can sit safely on the upholstered lid 15.

To bring the trolley from its stable position to its mobile position it is only necessary to tilt the trolley rearwardly so that the trolley pivots about the rearmost regions of feet 13 b 14b until the wheels 16 and 17 are in engagement with the ground when further tilting of the trolley, in effect pivoting about the axis of axle 19, will raise the feet 13a 14 a 13b and 14b clear of the ground (see Fig.3). The trolley is readily displaced between its stable and mobile positions by the handle 12, which has a hand grip part 12a so located relative to the box-like structure 11 that when hand grip part 12a is in a convenient hand-held position for pushing or pulling the trolley the wheels 16 and 17 are always in a ground-engaging position and the feet 13a 14a 13b and 14b are clear of the ground.

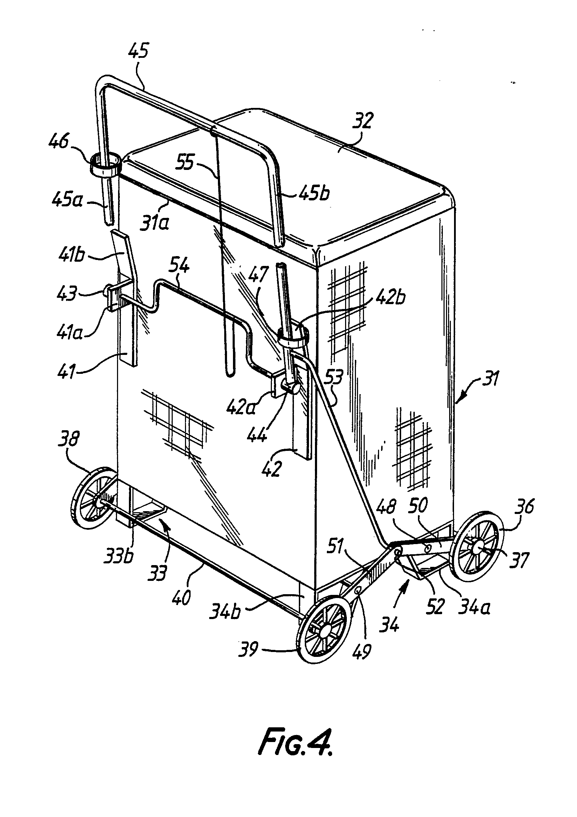

In the embodiment illustrated in Figs. 4,5 and 6 the shopping bag support arrangement 31 is of rigid box-like construction, comprising vertical and horizontal rods welded together at their intersections, and the upper open end of the arrangement 31 is closeable by an upholstered lid 32, hinged along its rear edge to the uppermost rear horizontal rod 31a of arrangement 31.

The trolley includes left and right feet 33 and 34 respectively made from metal bars bent to define forward feet 33a and 34a respectively and rear feet 33b and 34b respectively. When the trolley is totally supported by feet 33a, 34a, 33b and 34b the trolley is upright and stable and a person can readily sit on the upholstered lid 32.

The trolley further includes left and right forward wheels 35 and 36 respectively mounted on a common axle 37 and left and right rear wheels 38 and 39 mounted on a common axle 40, and the axles 37 and 40, are supported by link mechanisms, described hereinafter.

Two metal straps, left and right hand straps 41 and 42 respectively, are secured to the rear face of the box-like arrangement 31 and present rearwardly projecting lugs 41a and 42a respectively which support pivots 43 and 44 respectively for the ends of a generally U shaped handle 45. Upward extensions 41b and 42b from straps 41 and 42 respectively constitute stops for the upward and forward pivoted movement of handle 45 and two rings, left hand ring 46 and right hand ring 47, on the left and right hand limbs 45a and 45b respectively of handle 45 are so loose fitting on handle 45 as to be engageable over the extensions 41b and 42b to secure handle 45 to extensions 41b and 42b.

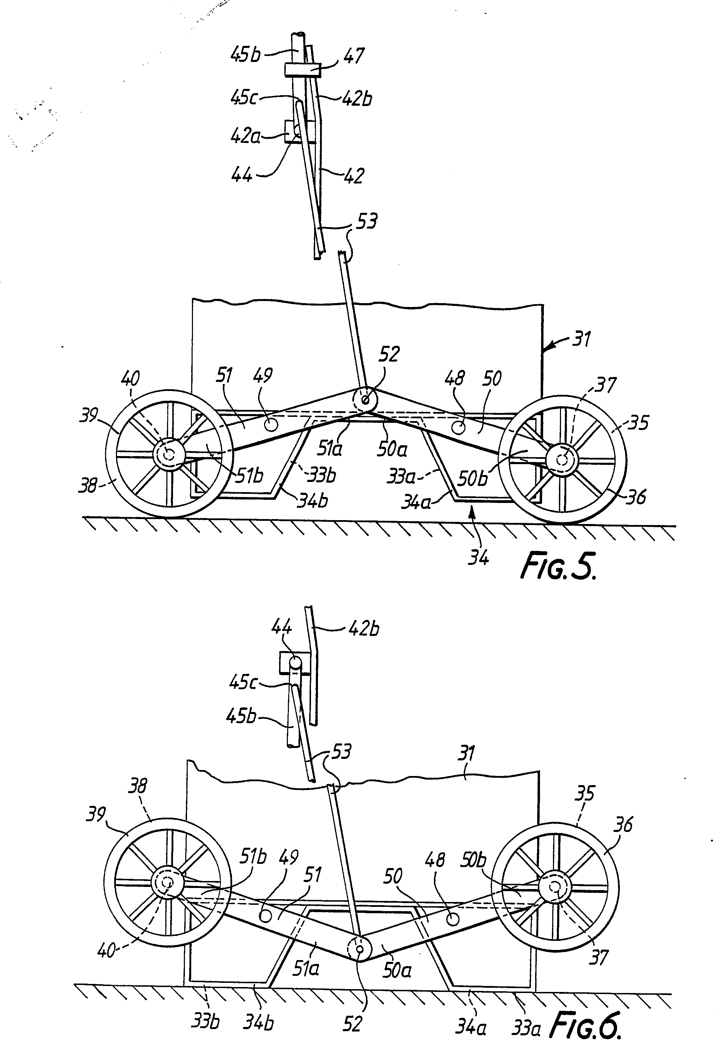

As will be evident from Figs. 5 and 6 the extensions 41b and 42b are slightly inclined to the plane of the rear face of the shopping bag arrangement 31 so that only the uppermost regions of extensions 41b and 42b engage the limbs of handle 45 and the rings 46 and 47 have such bores as to pass partially down extensions 41b and 42b to securely retain the handle in fixed operational position relative to the arrangement 31. When the two rings 46 and 47 are elevated above extensions 41 b and 42b the handle 45 can be pivoted about its pivoted axis defined by lugs 41a and 42a and swing rearwardly and downwardly to lie substantially parallel with the rear plane of arrangement 31.

The wheel-axles 37 and 40 are as described above, supported by link mechanisms, the link mechanism on the right side of the trolley is a mirror image of that on the left side of the trolley and therefore only the mechanism on the right side, as shown in Figs. 5 and 6, will be described.

The box-like shopping bag support arrangement 31 supports two pivot pins 48 and 49 from its undersurface, pin 48 being forward of the pin 49, and a first lever 50 is pivoted at a mid-region on pin 48 whilst a second lever 51 is pivoted at a mid-region on pin 49. Lever 50 has its end 50a pivotally connected to an end 51a of lever 51 by a pivot pin 52. The fit of pivot pin 52 in the levers 50 and 51 is such as allows the pivot pin 52, and the adjacent ends 50a and 51a of the levers 50 and 51 respectively to pass through that plane passing through the axes of pins 48 and 49.

The outer end 50b of lever 50 supports the common axle 37 and the outer end 51b of lever 51 supports the common axle 40.

The pivot pin 52 is connected to the handle 45 by a rigid link element 53 which has its upper end turned through some 90° to locate in a bore 45c in limb 45b of handle 45 at a location spaced from the pivot 44.

With the arrangement as described above, and with the handle 45 in its uppermost forward position locked onto extensions 41b and 42b by rings 46 and 47 respectively, the bore 45c in handle 45 is above pivot 44, link element 53 is thereby in an elevated position and the pivot pin 52 is above the plane passing through the axes of pins 48 and 49 whereby the ends 50a and 51a of links 50 and 51 are above said plane passing through the axes of pins 48 and 49, the outer ends 50b and 51b of levers 50 and 51 are in their lowermost positions and the axles 37 and 40 and thereby supported in their lowermost positions wherein the wheels 35, 36, 38 and 39 are in their ground-engaging positions and the feet 33a, 33b, 34a and 34b are elevated above the ground level.

When the rings 46 and 47 are raised clear of the extensions 41b and 42b to release handle 45 said handle can pivot rearwardly and downwardly about pivot 43 and 44 until the said handle 45 is in a substantially vertical plane beneath pivots 43 and 44. In pivoting from its upper operational position to its downwardly depending position the handle 45 forces the upper regions of rigid link 53 from its position above pivot 44 to a position below pivot 44, thereby imparting a downward displacement on rigid link 53 which displaces the pivot 52 from its position above the plane passing through the axes of pins 48 and 49 (as shown in Fig.5) to a position below said plane (as shown in Fig. 6). The downward displacement of pivot 52 causes clockwise rotation of lever 51 about its pivot pin 49 and anti-clockwise displacement of lever 50 about its pivot pin 48, whereupon the common axles 37 and 40 are elevated relative to the feet 33a, 33b, 34a and 34b to raise the wheels 35, 36, 38 and 39 out of contact with the ground whereupon the trolley is supported upright and stable on its feet 33a, 33b, 34a and 34b. When in such stable position with the trolley resting wholly on feet 33a, 33b, 34a and 34b a person can sit safely on the upholstered lid 32.

It will be noted from Fig. 4 that the trolley further includes a carrying handle 54, extending between pivots 43 and 44, by which the trolley can be lifted when the handle is in its inoperative position. The trolley further includes a cord 55 extending between the handle 45 and carrying handle 54 to aid persons who may have difficulty in bending. Thus, when the handle 45 is pivoted to its inoperative position beneath pivots 43 and 44 the cord 55 can be grasped near its attachment to carrying handle 54 and the handle 45 raised to a height at which it can be readily grasped by simply pulling on the cord 55.

It will also be noted that when the trolley is in its mobile condition supported on its wheels 35, 36, 38 and 39, the trolley is, by virtue of its four wheel support, extremely stable and can be used as a walking aid for aged or otherwise inform persons.

The trolley can also include a hand grip on the bridge part of handle 45, suitable to assist persons who may have difficulty grasping a handle of the normal tubing size.

It will also be seen that a shopping trolley as defined above offers walking aid facilities and rest facilities for a shopper which can be of great benefit to aged or otherwise infirm persons who may have difficulty in walking and/or difficulties in coping with the normal walking associated with shopping without frequent rests.

## Claims

1. A shopping trolley comprising a wheeled frame, a handle, a shopping bag arrangement and rigid feet upon which the trolley can adopt an upright stable position, characterised in that the shopping bag arrangement comprises a rigid, generally rectangular, box-like structure which forms part of the said frame or is secured to the said frame, and a lid for said rectangular box-like structure is adapted to define a seat upon which a person may sit when the trolley is upright and supported on its rigid feet.

2. A shopping trolley as claimed in claim 1 characterised in that said rigid, generally rectangular, box-like structure is made in one piece.

3. A shopping trolley as claimed in claim 1 characterised in that said rigid, generally rectangular, box-like structure is fabricated.

4. A shopping trolley as claimed in claim 1, 2, or 3 characterised in that said wheeled frame comprises rigid elements secured to the rigid, generally rectangular, box-like structure and said elements support at least one wheeled axle.

5. A shopping trolley as claimed in claim 1, 2, 3 or 4 characterised in that the trolley includes two wheels supported by the frame and arranged for rotation about a common axis.

6. A shopping trolley as claimed in claim 5 characterised in that the said two wheels remain in contact with the ground whilst said trolley is erect and supported on its rigid feet.

7. A shopping trolley as claimed in claim 5 characterised in that the two wheels are supported out of contact with the ground whilst said trolley is erect and supported on its rigid feet.

8. A shopping trolley as claimed in claim 1, 2, 3 or 4 characterised in that the trolley includes four wheels, two wheels being mounted for rotation about a first common axis and two wheels being mounted for rotation about a second common axis, said first and second common axes being substantially parallel.

9. A shopping trolley as claimed in claim 8 characterised in that with the trolley upright the four wheels are optionally displaceable between one condition wherein the rigid feet are in contact with the ground and a second condition wherein said rigid feet are out of contact with the ground.

10. A shopping trolley as claimed in claim 9 characterised in that the trolley includes a link mechanism for said wheels which allow the axes of said wheels to be displaced towards and away from the ground-engaging plane of said rigid feet.

11. A shopping trolley as claimed in claim 9 in which said wheels are resiliently loaded towards that condition wherein the fixed feet are displaced from their ground-engaging condition and said resilient loading is so arranged that the fixed feet are only engaged with the ground when a person is sitting on the said lid seat.

12. A shopping trolley as claimed in claim 10 characterised in that said link mechanism allows said wheels to be displaced between a first condition wherein the fixed feet are clear of the ground and a second condition wherein the fixed feet are engaged with the ground and said wheels are elevated out of contact with the ground.

13. A shopping trolley as claimed in claim 12 characterised in that said handle is attached to said rigid, generally rectangular, box-like structure and is displaceable between a normal operating position, for pushing or pulling the trolley, and an inoperative position, the said handle being linked to said link mechanism and in displacing from its normal operating position serving to elevate the wheels to allow the trolley to stand erect on its fixed feet and when displacing towards its normal operating position serving to lower said wheels to displace the fixed feet away from the ground.

*Fig.1.*

*Fig.2.*

*Fig.3.*

Fig.4.

FIG. 5.

FIG. 6.